# EUROPÄISCHE PATENTSCHRIFT

(11) **EP 0 545 119 B1**
(45) Veröffentlichungstag und Bekanntmachung des Hinweises auf die Patenterteilung: **22.05.1996**
(21) Anmeldenummer: 92119432.0
(22) Anmeldetag: 13.11.1992
(51) Int. Cl.: A62B 25/00

(54) **Behältertür für eine Sauerstoffversorgungseinheit**
Door for oxygen supply unit container
Porte de réceptacle pour dispositif d'aménagement d'oxygène

(30) Priorität: 06.12.1991 DE 4140264
(43) Veröffentlichungstag der Anmeldung: 09.06.1993
(73) Patentinhaber: Drägerwerk Aktiengesellschaft, D-23542 Lübeck (DE)
(72) Erfinder: Schnoor, Christian, W-2400 Lübeck 1 (DE); Thometschek, Roderich, W-2406 Stockelsdorf (DE); Rittner, Wolfgang, W-2407 Bad Schwartau (DE)

(56) Entgegenhaltungen:
- EP-A- 0 242 704
- EP-A- 0 268 747
- DE-A- 3 719 427

## Beschreibung

Die Erfindung betrifft eine um ein Gelenk schwenkbare Behältertür zum Verschluß eines Behälters einer Sauerstoffversorgungseinheit in einem Fluggerät mit einem in Richtung des Behälters abgekanteten Türrand der Behältertür und mit einer Verriegelung zum Eingriff von der Behältertür in den Behälter.

Ein Behälter mit einer Sauerstoffversorgungseinheit zum Einbau in ein Fluggerät ist aus der DE-A1 37 19 427 bekanntgeworden. Derartige Sauerstoffversorgungseinheiten sind in den Deckenaufbauten im Passagierraum von Flugzeugen angeordnet und dienen im Bedarfsfall zur Versorgung der Passagiere mit dem zur Atmung notwendigen Sauerstoff. Die Sauerstoffversorgungseinheit besteht aus einem Behälter, in welchem Sauerstoffmasken und ein Sauerstoffgenerator angeordnet sind und einer um ein Gelenk schwenkbaren Behältertür, die zum Verschluß des Behälters dient und hierzu an einem Halteblech ein in den Behälter eingreifendes Verriegelungsteil besitzt. Die Behältertür hat einen in Richtung des Behälters abgekanteten Türrand, der in der Schließstellung plan auf dem Behälter aufliegt.

Nachteilig bei der bekannte Behältertür ist, daß sie keine besondere Verwindungssteifigkeit besitzt, wodurch das Zusammenwirken des Verriegelungsteils an der Behältertür mit dem entsprechenden Gegenstück am Behälter beeinträchtigt sein kann. Ist beispielsweise die Behältertür verzogen, sitzt das Verriegelungsteil verkantet im Behälter, und es kann vorkommen, daß die Behältertür im Bedarfsfall nicht öffnet.

Der Erfindung liegt die Aufgabe zugrunde, eine Behältertür derart zu verbessern, daß sie eine hohe Verwindungssteifigkeit bei kleinstmöglichem Gewicht besitzt.

Die Lösung der Aufgabe erfolgt dadurch, daß die Behältertür mit einem am Türrand mindestens stückweise umlaufenden, profilartigen Verstärkungselement versehen ist, welches Befestigungsmittel an der Behältertür und/oder dem Türrand aufweist.

Der Vorteil der Erfindung besteht im wesentlichen darin, daß die Behältertür mit einem profilartigen Verstärkungselement versehen ist, welches am Türrand mindestens stückweise umläuft und dadurch die Behältertür versteift. Da bereits der Türrand senkrecht zur Behältertür steht, ist es zweckmäßig das Verstärkungselement so auszuführen, daß es zusammen mit dem Türrand und der Behältertür ein rechteckförmiges Hohlprofil bildet. Das Verstärkungselement kann als einstückiges Formteil ausgeführt sein, welches in die Behältertür eingelegt wird und mit Befestigungsmitteln sowohl mit dem Türrand als auch mit der planen Fläche der Gehältertür verbunden wird. Das Befestigungsmittel kann beispielsweise eine Punktschweißung sein. Es ist auch möglich, eine derartige Behältertür nur stückweise mit Verstärkungselementen zu versehen, indem diese nur in den Ecken der Behältertür angebracht sind.

Vorteilhafte Ausgestaltungen der Erfindung sind in den Unteransprüchen angegeben.

Es ist zweckmäßig, das Verstärkungselement mit einzelnen, die Türränder verbindenden rechteckförmigen, profilartigen Stegen zu versehen, welche Befestigungsmittel an der Behältertür besitzen. Die Stege können sowohl diagonal innerhalb der Behältertür als auch parallel zum Türrand verlaufen, aber auch untereinander in Form einer Fachwerkstruktur verbunden sein.

Es ist zweckmäßig, das Halteblech, an welchem die Verriegelung für die Verriegelung für die Behältertür befestigt ist, einstückig an das Verstärkungselement und/oder die Stege anzuformen. Das Halteblech sitzt üblicherweise gegenüber dem Gelenk der Behältertür. Der Vorteil der einstückigen Bauweise besteht im wesentlichen darin, daß das Halteblech zusammen mit dem Verstärkungselement und den Stegen in die Behältertür eingesetzt und dann das Halteblech, das Verstärkungselement und die Stege in einem Arbeitsgang mit dem Türrand bzw. der planen Fläche der Behältertür verbunden werden können.

An dem Verstärkungselement sind zweckmäßigerweise in der Schwenkachse des Gelenks parallel zum Türrand verlaufende Gelenkfalze angebracht, welche zur Verstärkung des Gelenks der Behältertür dienen.Zwischen Gelenkfalz und Türrand entsteht hierdurch ein scharnierähnlicher Spalt, in den ein entsprechendes Gegenstück vom Behälter, ein Behälterfalz eingreifen kann. Die Drehfunktion des Gelenks wird mit einem durch den Türrand, Behälterfalz und Gelenkfalz durchgesteckten Stift erreicht.

Das Befestigungsmittel des Verstärkungselementes ist als ein zum Türrand abgekanteter erster Befestigungsfalz ausgeführt mit einer ersten Klebeschicht zwischen dem ersten Befestigungsfalz und dem Türrand und einem zweiten Befestigungsfalz, parallel zur planen Fläche der Behältertür mit einer zweiten Klebeschicht zwischen dem zweiten Befestigungsfalz und der Behältertür. Als Klebeschicht ist ein Epoxydharzkleber geeignet. Zweite Befestigungsfalze sind ebenfalls vorgesehen an den Stegen und dem Halteblech. Durch Variation der Breite der Befestigungsfalze kann die Behältertür zusätzlich versteift werden.

Um eine gleichmäßige Dicke der Klebeschicht zu erreichen, ist es zweckmäßig, zumindestens die an der planen Fläche der Behältertür anliegenden Befestigungsfalze mit Abstandsnoppen, ähnlich wie Unterlegscheiben, zu versehen. Im Bereich des Türrandes sind die Abstandsnoppen entbehrlich, da hier das Verstärkungselement gleich mit Untermaß gefertigt werden kann, wodurch sich unmittelbar ein allseitiger Klebespalt zwischen dem Türrand und dem ersten Befestigungsfalz ergibt. Ein Ausführungsbeispiel der Erfindung ist in der Zeichnung dargestellt und im folgenden näher erläutert.

Es zeigen:
- Fig. 1: einen Behälter für eine Sauerstoffversorgungseinheit mit einer Behältertür,
- Fig. 2: eine Aufsicht auf die Innenseite der Behältertür nach der Fig. 1,
- Fig. 3: den Schnitt A-B der Behältertür nach der Fig. 2.

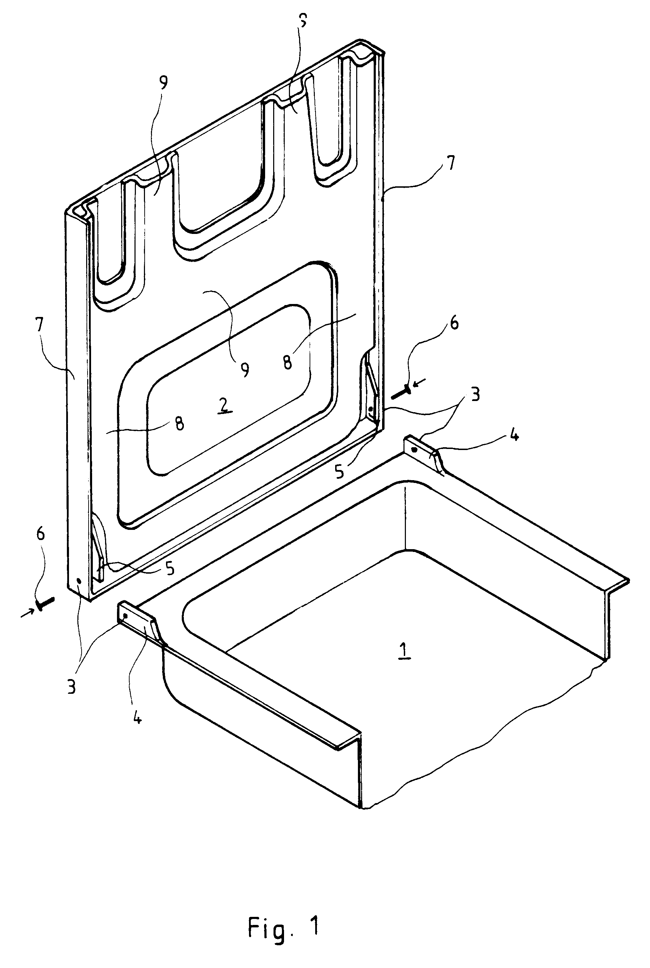

Fig. 1 zeigt einen Behälter (1) für eine in der Fig. 1 nicht dargestellte Sauerstoffversorgungseinheit mit einer aufgeklappten Behältertür (2), welche um ein Gelenk (3) schwenkbar ist. Das Gelenk (3) ist im demontierten Zustand gezeigt. Es besteht aus zwei durchbohrten Behälterfalzen (4) am Behälter (1), welche in gleichartig ausgebildete ebenfalls durchbohrte Gelenkfalze (5) in der Behältertür (2) eingreifen. Die Behältertür (2) besitzt an ihrer Innenseite einen umlaufenden, kastenförmigen Türrand (7), der bei geschlossener Behältertür (2) auf dem Behälter (1) anliegt und im Bereich der Gelenkfalze (5) durchbohrt ist. Die Behälterfalze (4) befinden sich in dem Zwischenraum zwischen dem Türrand (7) und den Gelenkfalzen (5) und sind mit einem durchgesteckten Stift (6) verbunden.

Die Innenseite der Behältertür (2) ist mit einem am Türrand (7) umlaufenden, profilartigen Verstärkungselement (8) versehen, mit quer zu den Türrändern (7) verlaufenden, ebenfalls profilartigen Stegen (9).

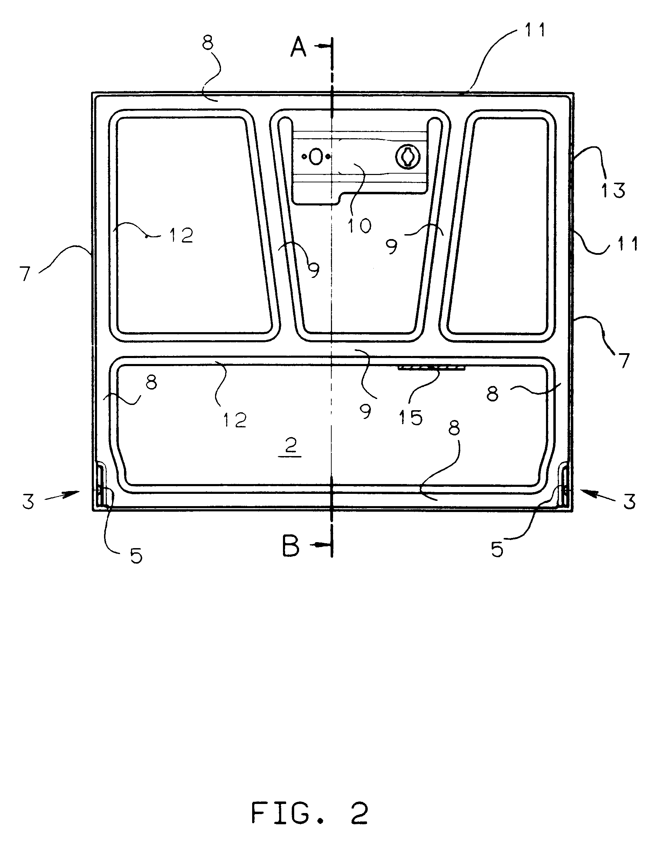

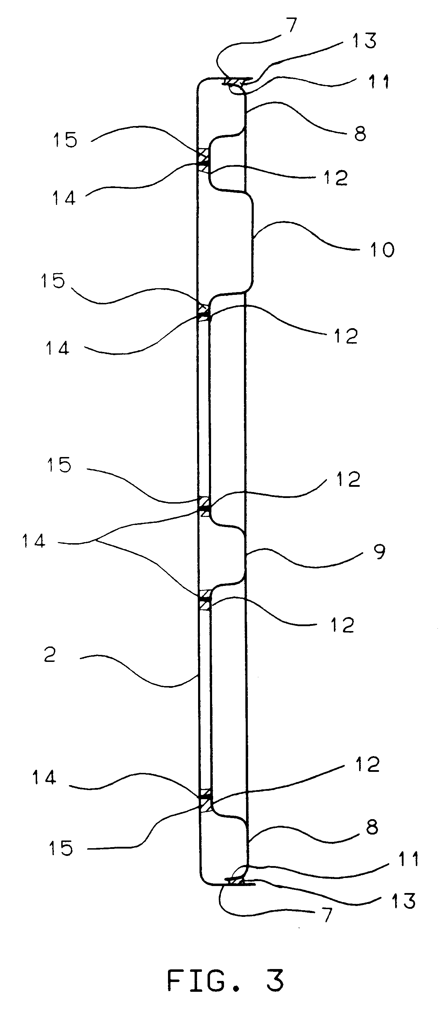

Fig. 2 zeigt eine Aufsicht auf die Innenseite der Behältertür (2). Gleiche Komponenten sind mit gleichen Bezugsziffern der Fig. 1 bezeichnet. An der dem Gelenk (3) gegenüberliegenden Seite der Behältertür (2) ist an das Verstärkungselement (8) ein Halteblech (10) angeformt, welches zur Befestigung einer nicht dargestellten Verriegelung für die Behältertür (2) dient. Die Gelenkfalze (5) sind ebenfalls einstückig an das Verstärkungselement (8) angeformt. Fig. 3 zeigt den Schnitt A - B durch die Behältertür (2) nach der Fig. 2. Gleiche Komponenten sind mit gleichen Bezugsziffern der Fig. 1 und Fig. 2 bezeichnet. Zur Befestigung des Verstärkungselementes (8) mit den profilartigen Stegen (9) und dem Halteblech (10) an der Behältertür (2) sind am Verstärkungselement (8) im Bereich des Türrandes (7) erste Befestigungsfalze (11) vorgesehen, die parallel zum Türrand (7) verlaufen und einen Spalt für eine erste Klebeschicht (13) bilden. Im Bereich der planen Oberfläche der Behältertür (2) haben das Verstärkungselement (8), das Halteblech (10) und die Stege (9), parallel zur planen Oberfläche der Behältertür (2) verlaufende zweite Befestigungsfalze (12), die an der Behältertür über Abstandsnoppen (14) aufliegen und eine zweite Kleberschicht (15) aufweisen. Die Klebeschichten (13, 15) sind auch in der Fig. 2 erkennbar, der Übersichthalber aber nur stückweise gezeichnet. Als Kleber eignet sich beispielsweise ein Epoxydharzkleber. Durch die Abstandsnoppen (14) wird eine gleichmäßige Verteilung des Klebers erreicht. Im Bereich des Türrandes (7) entsteht durch das Verstärkungselement (8) ein umlaufendes, rechteckförmiges Hohlprofil, welches die Behältertür (2) versteift. Die Stege (9) bilden zusammen mit der planen Fläche der Behältertür (2) ebenfalls ein Hohlprofil, wodurch die Steifigkeit weiter verbessert wird. Die Verstärkungselemente (8) mit den Stegen (9), dem Halteblech (10) und den Gelenkfalzen ergeben zusammen ein einstückiges Einlegeteil, welches in einem Arbeitsgang mit der Behältertür (2) bzw. dem Türrand (7) verklebt wird.

## Patentansprüche

1. Um ein Gelenk schwenkbare Behältertür (2) zum Verschluß eines Behälters einer Sauerstoffversorgungseinheit in einem Fluggerät, mit einem in Richtung des Behälters abgekanteten Türrand (7) der Behältertür und mit einer Verriegelung (10) zum Eingriff von der Behältertür in den Behälter, dadurch gekennzeichnet, daß die Behältertür (2) mit einem am Türrand (7) mindestens stückweise umlaufenden, profilartigen Verstärkungselement (8) versehen ist, welches Befestigungsmittel (11, 12, 13, 15) an der Behältertür (2) und/oder dem Türrand (7) aufweist.

2. Behältertür nach Anspruch 1, dadurch gekennzeichnet, daß das Verstärkungselement (8) einzelne, mindestens die Türränder (7) verbindende, rechteckförmige profilartige Stege (9) aufweist, welche Befestigungsmittel (12, 15) an der Behältertür (2) besitzen.

3. Behältertür nach einem der Ansprüche 1 oder 2, dadurch gekennzeichnet, daß das Verstärkungselement (8) und/oder die Stege (9) ein einstückig angeformtes Halteblech (10) zur Befestigung der Verriegelung aufweisen.

4. Behältertür nach einem der Ansprüche 1 bis 3, dadurch gekennzeichnet, daß das Verstärkungselement (8) in der Schwenkachse des Gelenks (3), zum Behälter (1) weisende, parallel zum Türrand (7) verlaufende Gelenkfalze (5) aufweist.

5. Behältertür nach einem der Ansprüche 1 bis 4, dadurch gekennzeichnet, daß das Befestigungsmittel ein parallel zum Türrand (7) abgekanteter erster Befestigungsfalz (11) bzw. zur Behältertür (2) abgekanteter zweiter Befestigungsfalz (12) des Verstärkungselementes (8) bzw. des Steges (9) und des Haltebleches (10) ist, mit einer ersten Klebeschicht (13) zwischen dem Türrand (7) und dem ersten Befestigungsfalz (11) und einer zweiten Klebeschicht (15) zwischen der Behältertür (2) und dem zweiten Befestigungsfalz (12).

6. Behältertür nach Anspruch 5, dadurch gekennzeichnet, daß mindestens die an der Behältertür (2) anliegenden zweiten Befestigungsfalze (12) Abstandsnoppen (14) für die zweite Klebeschicht (15) aufweisen.

## Claims

1. A container door (2) which is pivotable about a hinge for closing a container of an oxygen supply unit in an aeroplane with a door edge (7) of the container door which is bent in the direction of the container and with a locking element (10) for engaging the container door in the container, characterised in that the container door (2) is provided with a profile-like reinforcing element (8), which extends at least in sections around the door edge (7) and which comprises securing means (11, 12, 13, 15) for securing to the container door (2) and/or door edge (7).

2. A container door according to claim 1, characterised in that the reinforcing element (8) comprises individual, rectangular, profile-like webs (9), which connect at least the door edges (7) and which comprise securing means (12, 15) for securing to the container door (2).

3. A container door according to one of claims 1 or 2, characterised in that the reinforcing element (8) and/or the webs (9) comprise a retaining plate (10) for securing the locking element, the retaining plate being integrally moulded onto the reinforcing element (8) and/or the webs (9).

4. A container door according to one of claims 1 to 3, characterised in that the reinforcing element (8) comprises hinge folds (5) in the pivot axis of the hinge (3), which hinge folds point towards the container (1) and extend parallel to the door edge (7).

5. A container door according to one of claims 1 to 4, characterised in that the securing means is a first securing fold (11), which is bent parallel to the door edge (7), and a second securing fold (12), which is bent relative to the container door (2), of the reinforcing element (8) or web (9) and of the retaining plate (10), with a first adhesive layer (13) between the door edge (7) and the first securing fold (11) and a second adhesive layer (15) between the container door (2) and the second securing fold (12).

6. A container door according to claim 5, characterised in that at least the second securing folds (12) resting against the container door (2) comprise spacing nubs (14) for the second adhesive layer (15).

## Revendications

1. Porte de boîtier (2) pivotant autour d'une articulation, destinée à fermer le boîtier d'une unité d'alimentation en oxygène dans un avion, comportant un bord de porte (7) replié en direction du boîtier et un dispositif de verrouillage (10) pour l'engagement de la porte dans le boîtier, caractérisée en ce que la porte de boîtier (2) est équipée d'un élément de renforcement (8) du type profilé, s'étendant au moins sur une partie du pourtour (7) de la porte, élément qui comporte des moyens de fixation (11, 12, 13, 15) sur la porte du boîtier (2) et/ou sur le bord (7) de la porte.

2. Porte de boîtier selon la revendication 1, caractérisée en ce que l'élément de renforcement (8) est équipé de nervures (9) isolées, du type profilées, rectangulaires, reliant au moins les bords (7) de porte, qui comportent des moyens de fixation (12, 13) sur la porte de boîtier (2).

3. Porte de boîtier selon l'une des revendications 1 ou 2, caractérisée en ce que l'élément de renforcement (8) et/ou les nervures (9) présentent une plaque de maintien (10), formée de façon monobloc, pour assurer la fixation du dispositif de verrouillage.

4. Porte de boîtier selon l'une des revendications 1 à 3, caractérisée en ce que l'élément de renforcement (8) présente, dans l'axe de pivotement de l'articulation (3), des agrafes d'articulation (5) parallèles au bord (7) de porte, orientées en direction du boîtier (1).

5. Porte de boîtier selon l'une des revendications 1 à 4, caractérisée en ce que le moyen de fixation est réalisé sous la forme d'une première agrafe de fixation (11) repliée parallèlement au bord (7) de porte, et/ou d'une deuxième agrafe de fixation (12) repliée en direction de la porte (2) de boîtier, de l'élément de renforcement (8) et/ou de la nervure (9) et de la plaque de maintien (10), avec une première couche adhésive (13) entre le bord (7) de porte et la première agrafe de fixation (11) et avec une deuxième couche adhésive (15) entre la porte de boîtier (2) et la deuxième agrafe de fixation (12).

6. Porte de boîtier selon la revendication 5, caractérisée en ce qu'au moins les deuxièmes agrafes de fixation (12) qui reposent sur la porte de boîtier (2) présentent dos bossages d'écartement (14) destinés à la deuxième couche adhésive (15).
